# EUROPÄISCHE PATENTSCHRIFT

(11) **EP 3 504 710 B1**
(45) Veröffentlichungstag und Bekanntmachung des Hinweises auf die Patenterteilung: **24.06.2020**
(21) Anmeldenummer: 17737510.2
(22) Anmeldetag: 29.06.2017
(51) Int. Cl.: G11B 7/26, G11B 7/24038

(54) **VORRICHTUNG ZUR HERSTELLUNG N-SCHICHTIGER OPTISCHER INFORMATIONSTRÄGER UND VERFAHREN HIERZU**
APPARATUS FOR PRODUCING N-LAYER OPTICAL INFORMATION CARRIERS AND METHOD THEREFOR
DISPOSITIF POUR LA FABRICATION DE SUPPORTS D'INFORMATIONS OPTIQUES EN N COUCHES ET PROCÉDÉ ASSOCIÉ

(43) Veröffentlichungstag der Anmeldung: 03.07.2019
(73) Patentinhaber: Sonopress GmbH, 33332 Gütersloh (DE)
(72) Erfinder: DICKENHORST, Jörg, 33824 Werther (DE)
(74) Vertreter: Schober, Mirko
(86) Internationale Anmeldenummer: PCT/EP2017/066122
(87) Internationale Veröffentlichungsnummer: WO 2019/001711

(56) Entgegenhaltungen:
- WO-A1-2011/091561
- US-A1- 2007 291 630
- US-A1- 2010 028 590
- US-A1- 2011 019 527

## Beschreibung

### TECHNISCHES GEBIET

Bei der Erfindung handelt es sich um eine Vorrichtung zur Herstellung eines n-schichtigen optischen Informationsträgers, der eine Spritzgießeinheit zur Herstellung eines Trägerkörpers mit einer ersten Informationsschicht, eine erste Embossingeinheit zur Herstellung einer zweiten Informationsschicht, welche einen Eingang aufweist, über den Informationsträger in die Embossingeinheit aufgenommen werden können, wobei die Embossingeinheit weiter eine Ausgabeeinheit aufweist, über welche die beschichteten Informationsträger ausgegeben werden, aufweist, und ein Verfahren zur Herstellung eines solchen Informationsträgers.

### STAND DER TECHNIK

Die optischen Informationsträger der ersten beiden Generationen, die Laserdisc und die CD, werden im Spritzgießverfahren hergestellt, indem bei dem Spritzgießverfahren die Informationen an einer Seite in den Tragekörper eingebracht werden. Diese Informationsschicht wird verspiegelt und wird durch den Tragekörper hindurch ausgelesen. Die zweischichtige Laserdisc wurde so hergestellt, dass zwei Tragekörper halber Gesamtdicke erstellt und an den informationstragenden, verspiegelten Seiten zusammengeklebt wurden. In der nächsten Generation von optischen Informationsträgern, der DVD, sind auch Ausführungen spezifiziert, die sich nicht mehr allein durch Spritzgießen herstellen lassen, da mindestens eine Seite eines halbdicken Tragekörpers mit zwei Informationsschichten versehen werden muss. Zur Erstellung der zweiten Informationsschicht wird unter anderem ein Embossingverfahren entwickelt. Auf die semiverspiegelte erste Informationsschicht, die wie oben beschrieben hergestellt wird, wird ein Lack, der einige zig *µ*m dick ist, aufgetragen. In diesen, durchaus bereits vorgehärteten, Lack wird ein Werkzeug, dessen Oberfläche ein Negativ der Informationsschicht trägt, eingepresst und der Lack, in der Regel durch UV-Strahlung, ausgehärtet. Anschließend wird die zweite Informationsschicht entsprechend verspiegelt und die halbdicken Trägerkörper an den informationstragenden Seiten miteinander verklebt.

Bei der Blu-ray Disc, kurz BD genannt, liegt die informationstragende Schicht außen, d.h. die Information wird nicht mehr durch den Trägerkörper hindurch ausgelesen. Die BD ist in zwei Versionen definiert, eine BD-25, die eine Informationsschicht enthält, die durch Spritzguss erzeugt werden kann, und eine BD-50, einen zweischichtigen Informationsträger, bei dem die zweite Schicht in der Regel durch Embossing hergestellt wird. Eine Vorrichtung zur Herstellung einer BD besteht in vielen Fällen aus einer Spritzgusseinheit, in der der Trägerkörper mit der eingeprägten ersten Informationsschicht hergestellt wird, und einer Embossingeinheit. In dieser wird in der Regel erst die erste Informationsschicht verspiegelt und anschließend wird auf die Verspiegelung ein Lack aufgetragen, die Information eingeprägt, wobei der Lack mittels UV-Strahlung ausgehärtet wird, und eine Schutzschicht aufgetragen. Da gerade die Anforderungen an die Fertigungsgenauigkeit einer Embossingeinheit sehr hoch sind, spiegelt sich dieses auch im Preis einer solchen Anlage wider.

In jüngster Zeit wird über die Ultra High Density Blu-Ray Disc, kurz UHD-BD, diskutiert. Die Technik der UHD-BD beruht auf der der BD, wobei die Informationsdichte der einzelnen Informationsschichten erhöht wurde. Weiterhin definiert die Spezifikation sowohl eine zwei-schichtige Ausführungsform, die UHD-BD 66, wie auch eine drei-schichtige, die UHD-BD 100.

Angesichts des hohen Preises der Embossingeinheit haben sich zwei Herstellungsverfahren für die UHD-BD 100 etabliert. Auf einer Anlage, die aus einer Spritzgießeinheit und einer Embossingeinheit besteht, wird eine zwei-schichtige UHD-BD hergestellt und zwischengelagert. Nach Beendigung dieser Herstellungsschritte werden die zwischengelagerten Platten erneut der Embossingeinheit zugeführt und die dritte Informationsschicht wie die zweite aufgetragen und mit einer Schutzschicht versehen. Nachteil dieses Verfahrens, das auch Batchverfahren genannt wird, ist, dass eine gewisse Überproduktion erfolgen muss, da ein Anteil an Ausschuss bei der Herstellung der dritten Informationsschicht einkalkuliert werden muss. Eine Nachproduktion ist schwierig, da die Embossingeinheit dazu erst wieder zurückgerüstet werden müsste, so dass eine gewisse Überproduktion kostengünstiger ist. Ein weiterer Nachteil ist, dass bei der Zwischenlagerung die gefertigten Platten auskühlen, was die physischen und chemischen Parameter so verändert, dass der Ausschuss bei der Herstellung der dritten Schicht höher wird.

Die Singulus Technologies AG bietet ein Herstellungskonzept an, bei dem zwischen der Spritzgusseinheit und der Embossingeinheit eine Station eingebaut ist, mit der eine zweite Informationsschicht geprägt werden kann. Bei der Herstellung einer zwei-schichtigen UHD-BD wird diese Station einfach überbrückt und nimmt nicht mehr am Herstellungsprozess teil. Eine ähnliche Vorrichtung offenbart US 2011/019527 A1. In einer Spritzgießeinheit wird ein Träger erstellt, in den die erste Informationsschicht eingespritzt und diese Informationsschicht metallisiert worden ist. Dieser Träger wird an eine Schichtherstellungseinheit übergeben, die die zweite Informationsschicht erstellt und an eine weitere Schichtherstellungseinheit für die dritte Informationsschicht weitergibt. Nach der Erstellung der dritten Informationsschicht wird der Träger an eine Coatingstation weitergegeben, in der die Schutzschicht aufgebracht wird. Bei der Herstellung eines zwei-schichtigen Informationsträgers wird die zweite Schichtherstellungseinheit überbrückt und der Träger von der ersten Schichtherstellungseinheit direkt an die Coatingstation übergeben. Nachteil dieser Anlagen ist, dass auch bei der Herstellung eines zwei-schichtigen Informationsträgers die Station nicht bei anderen Prozessen genutzt werden kann.

### DIE ERFINDUNG

Aufgabe der Erfindung ist es, eine Vorrichtung und zur Verfügung zu stellen, bei der die herzustellenden Informationsträger mit beliebig vielen Informationsschichten in einem kontinuierlichen Prozess, der sog. Inlinefertigung, hergestellt werden. Dabei soll die Vorrichtung möglichst effektiv genutzt werden.

Gelöst wird die Aufgabe durch eine Vorrichtung zur Herstellung eines n-schichtigen optischen Informationsträgers mit den Merkmalen des Anspruchs 1. Bevorzugte Ausführungsformen werden in den abhängigen Ansprüchen beschrieben.

Eine beispielhafte erfindungsgemäße Vorrichtung zur Herstellung eines n-schichtigen optischen Informationsträgers weist Folgendes auf: eine Spritzgießeinheit zur Herstellung eines Trägerkörpers mit einer ersten Informationsschicht, eine erste Embossingeinheit zur Herstellung einer zweiten Informationsschicht, welche einen Eingang aufweist, über den Informationsträger in die Embossingeinheit aufgenommen werden können. Diese und jede weitere Embossingeinheit weist neben einem Eingang weiter eine Ausgabeeinheit auf, über welche die beschichteten Informationsträger ausgegeben werden.Der Vorrichtung sind dabei weitere (n-2) Embossingeinheiten zur Herstellung von jeweils einer weiteren Informationsschicht, wobei "n" größer als zwei ist, zugeordnet und die jeweiligen Einheiten sind so miteinander verknüpft, dass der n-schichtige Informationsträger in einer Inlinefertigung hergestellt wird. Die weiteren (n-2) Embossingeinheiten sind dabei so ausgelegt und angeordnet, dass sie an die Vorrichtung an- und abgekoppelt werden können, wobei - wie erwähnt - die weiteren Embossingeinheiten jeweils einen Eingang und eine Ausgabeeinheit aufweisen.

Mit einer Spritzgießeinheit und der ersten Embossingeinheit kann ein zwei-schichtiger optischer Informationsträger hergestellt werden. Dabei umfasst eine Embossingeinheit mindestens eine Auftragevorrichtung für den die Informationsschicht bildenden Lack, eine Prägevorrichtung, mit der die Information in den Lack übertragen wird, eine Aushärtungsvorrichtung, die durchaus auch Bestandteil der Prägevorrichtung sein kann, eine Metallisierungsvorrichtung, eine Auftrage- und Härtevorrichtung für den Coverlack und eine Ausgabeeinheit. Für weitere Zwischenschritte können durchaus auch weitere Vorrichtungen, wie beispielsweise eine Qualitätsinspektionsvorrichtung, eingebaut sein. Ebenso können einige Vorrichtungen doppelt vorhanden sein.

Wird nun eine weitere Embossingeinheit hinter der ersten Embossingeingheit aufgebaut und mit der Zwei-Schicht-Herstellungsvorrichtung verbunden, so wird die Einrichtung zur Coverbeschichtung in der ersten Embossingeinheit abgeschaltet. Die Coverbeschichtung findet dann beispielsweise immer in der jeweils letzten Embossingeinheit der Prozesskette statt. Mit dieser Vorrichtung kann ein drei-schichtiger optischer Informationsträger hergestellt werden. Mit einer weiteren Embossingeinheit kann ein vier-schichtiger Informationsträger hergestellt werden. Das System ist so aufgebaut, dass durch den Aufbau von (n-1) Embossingeinheiten ein n-schichtiger optischer Informationsträger in einer Inlinefertigung hergestellt werden kann. Ein Vorteil der Inlinefertigung ist, dass durch die Aushärtung der Schicht, in die die neue Informationsschicht geprägt worden ist, und die anschließende geforderte Verspiegelung, die Scheibe auf eine Temperatur gebracht wird, die für die Haftung der folgenden Schicht nahezu ideal ist. Es findet keine längere Zwischenlagerung wie bei der Batchherstellung statt, bei der die Platten auskühlen, bevorzugte Temperaturgradienten abgebaut werden und/oder die chemische Beschaffenheit der Oberfläche sich verändert.

Das mit Abstand komplexeste und teuerste Element der Vorrichtung ist die Embossingeinheit. Werden nicht alle Embossingeinheiten zur Herstellung des angeforderten optischen Informationsträgers benötigt, so können die in der Anordnung hinteren, nicht benötigten Embossingeinheiten abgekoppelt werden. Um die mindestens eine abgekoppelte Embossingeinheit nicht ungenutzt zu lassen, kann diese an eine andere Spritzgießeinheit gekoppelt werden.

In einer erfindungsgemäßen Vorrichtung kann die mindestens eine abgekoppelte Embossingeinheit mit einer weiteren Spritzgießeinheit gekoppelt werden, so dass damit eine weitere unabhängige Vorrichtung zur Herstellung eines mehrschichtigen Informationsträgers gebildet ist. Die Embossingeinheiten lassen sich so weitaus stärker nutzen, was die Stückkosten der Informationsträger senkt.

In einer bevorzugten Ausführungsform ist der Vorrichtung eine Steuereinheit zugeordnet, die den Herstellungsablauf steuert. Durch die Einbindung von Maschinen verschiedener Hersteller in eine Steuereinheit wird die Koordination des Programmablaufs vereinfacht.

In einer besonders bevorzugten Ausführungsform ist die Steuereinheit so programmiert, dass die Änderung des Ablaufs zur Herstellung unterschiedlicher mehrschichtiger optischer Informationsträger nur wenige Einstellschritte erfordert. Der Bediener einer derartigen Vorrichtung kann dann über eine Bedieneinheit, insbesondere über ein Bediendisplay die Veränderungen eingeben. In einer ganz besonders bevorzugten Ausführungsform kann der Bediener auf einem Bediendisplay einfach die Anzahl der Schichten des zu fertigenden Informationsträgers eingeben, und die Steuerung passt die Funktionen einzelner Embossingeinheiten an. Dies kann so weit führen, dass in einem Steuerschritt für diesen Herstellungsprozess (eine) nicht benötigte Embossingeinheit(en) abgekoppelt wird/werden.

In einer weiteren bevorzugten Ausführungsform erfolgt die Kopplung zwischen den verschiedenen Embossingeinheiten dadurch, dass die Ausgabeeinheit mit dem Eingang der in der Anordnung folgenden Embossingeinheit verbunden ist. Am Markt bekannte Embossingeinheiten haben in der Regel in einer Ausgabeeinheit fünf Ausgabestationen, in die die gefertigten Informationsträger abgelegt und gesammelt werden. Es gibt allerdings auch Ausführungsformen mit mehr oder weniger Ausgabestationen. Die gesammelten Informationsträger werden dann aus den Ausgabestationen entnommen und der weiteren Verarbeitung zugeführt. Wird nun eine der Ausgabestationen einer Ausgabeeinheit umgebaut, so dass der dort abgelegte Informationsträger zur nächsten Embossingeinheit transportiert werden kann, werden die beiden Embossingeinheiten gekoppelt. Der Transport kann durch ein Förderband erfolgen, es ist aber auch ein Balkenförderer denkbar oder einfach eine Ablage, von der ein Übergaberoboter die Informationsträger an die nächste Embossingeinheit weiterreicht. Es ist auch jede andere automatische Weitergabe denkbar, mit der die Fertigungslinie zwischen den Embossingeinheiten geschlossen wird. Die gewählte Ausgabestation, die für die Kopplung umgebaut wird, kann beliebig gewählt werden und der Anordnung der Embossingeinheiten zueinander angepasst werden.

Eine weitere bevorzugte Ausführungsform weist einen Raum zur Positionierung der weiteren Spritzgießeinheit auf, in dem die weitere Spritzgießeinheit angeordnet ist und mit der mindestens einen abgekoppelten Embossingeinheit verbunden ist. Bevorzugt erfolgt die Anordnung der Spritzgießeinheit derart, dass die mindestens eine abgekoppelte Embossingeinheit zur Ankopplung an die weitere Spritzgießeinheit nicht bewegt wird. Der Vorteil dieser Vorgehensweise ist, dass die Parameter der Embossingeinheit nicht erneut eingestellt werden müssen, weil die Einheit nicht bewegt worden ist. Die Aufbauzeit der weiteren Vorrichtung und der damit verbundene Produktionsstillstand werden so kurz wie möglich gehalten.

Gelöst wird die gestellte Aufgabe auch durch ein Verfahren mit den Merkmalen des Anspruchs 6. Ein bevorzugtes Verfahren zur Herstellung eines n-schichtigen optischen Informationsträgers umfasst folgende Schritte:
- Herstellen eines Trägerkörpers mit einer ersten Informationsschicht in einem Spritzgießverfahren, wobei die erste Informationsschicht mit einer reflektierenden Schicht versehen wird,
- Aufbringen einer zweiten Informationsschicht mittels eines Embossingverfahrens, wobei die zweite Informationsschicht mit einer entsprechend reflektierenden Schicht versehen wird, und
- Aufbringen weiterer (n-2) Informationsschichten mittels des Embossingverfahrens und Versehen jeder der Informationsschichten mit einer entsprechend reflektierenden Schicht, wobei "n" größer als zwei ist. In dem Verfahren wird der n-schichtige Informationsträger in einer Inlinefertigung hergestellt, wobei jede Informationsschicht, bis auf die erste, auf einer eigenen Embossingeinheit hergestellt und das Verfahren nach der letzten aufgebrachten Informationsschicht durch das Aufbringen einer Coverschicht beendet wird. Dabei umfasst eine Embossingeinheit mindestens eine Auftragevorrichtung für den die Informationsschicht bildenden Lack, eine Prägevorrichtung, mit der die Information in den Lack übertragen wird, eine Aushärtungsvorrichtung, die durchaus auch Bestandteil der Prägevorrichtung sein kann, eine Metallisierungsvorrichtung, eine Auftrage- und Härtevorrichtung für den Coverlack und eine Ausgabeeinheit. Dabei ist der Vorrichtung eine Steuereinheit zugeordnet, die den Herstellungsablauf steuert.

Wird in dem erfindungsmäßigen Verfahren das Herstellungsverfahren nach dem Aufbringen von weniger als n Schichten beendet, werden dabei die ungenutzten Embossingeinheiten aus der Steuerung herausgenommen. Dadurch können die ungenutzten Embossingeinheiten außer Betrieb genommen oder einer anderen Verwendung zugeführt werden. Erfindungsgemäß werden die aus der Steuerung herausgenommenen Embossingeinheiten einem weiteren separaten Verfahren zugeführt und steuerungstechnisch in dieses weitere Verfahren eingebunden. Die aus der Steuerung herausgenommenen Embossingeinheiten werden damit nicht einfach stillgelegt, sondern einem weiteren Verfahren zugeführt, was die Standzeiten dieser Embossingeinheiten verringert und die Embossingeinheiten effektiver nutzen lässt.

Dadurch, dass jede Informationsschicht in einer eigenen Embossingeinheit erstellt wird, ist es möglich, die Anzahl der Schichten des herzustellenden optischen Informationsträgers schnell zu ändern. Die Embossingeinheit der letzten aufzubringenden Schicht gibt den Informationsträger nicht an die nachfolgende Embossingeinheit weiter, sondern bringt die Abschussschicht auf und legt den Informationsträger an einer nicht umgebauten Ausgabestation der Ausgabeeinheit ab.

In einem weiteren bevorzugten Verfahren werden die Embossingeinheiten dabei räumlich nicht bewegt. Eine Bewegung der Embossingeinheit würde ein Abschalten der Embossingeinheit bedeuten, bei dem eine Reihe von komplexer, empfindlicher Verfahrensschritten abgeschaltet werden müssten. Die Wiederinbetriebnahme nach einem Umsetzen würde ein Neubestimmen der Prozessparameter mit sich bringen, was einen großen Zeitaufwand bedeutet. Bleibt die Embossingeinheit vor Ort und die Spritzgießeinheit wird angekoppelt, kann der Betrieb der weiteren Vorrichtung schnell aufgenommen werden.

### KURZBESCHREIBUNG DER ZEICHNUNG

Im Folgenden wird die Erfindung an einigen Ausführungsbeispielen erläutert.
- Figur 1 -: zeigt den schematischen Aufbau einer erfindungsgemäßen Vorrichtung mit n = 4,
- Figur 2 -: zeigt das Layout einer Embossingeinheit,
- Figur 3 -: zeigt die Einbindung einer Embossingeinheit in eine weitere Vorrichtung.

### BESTER WEG ZUR AUSFÜHRUNG DER ERFINDUNG

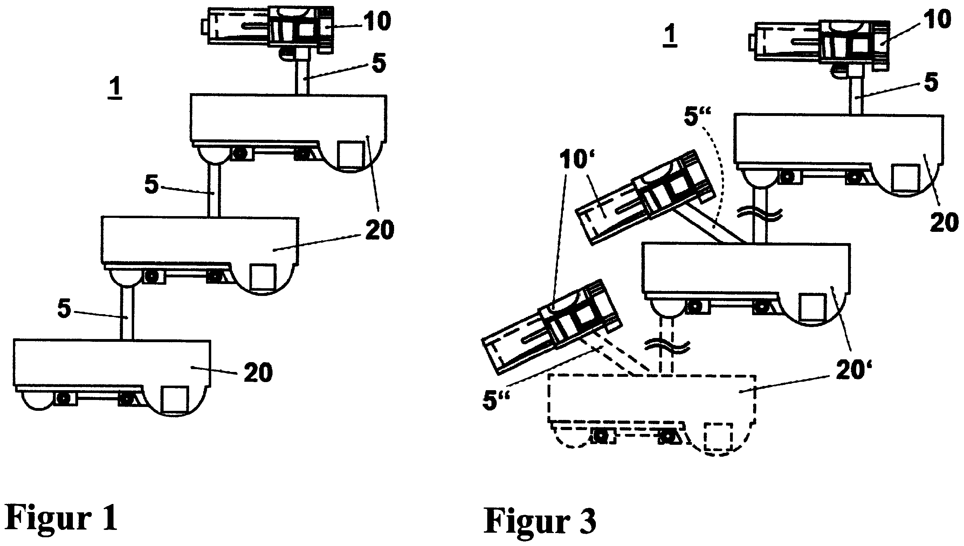

Die Figur 1 zeigt eine Vorrichtung 1 für die Herstellung eines vier-schichtigen optischen Datenträgers. In den Tragekörper wird beim Spritzgießen in der Spritzgießeinheit 10 die erste Informationsschicht eingebracht. Die Spritzgießeinheit 10 ist über eine Transportvorrichtung 5 mit der ersten Embossingeinheit 20 verbunden. Dort wird die zweite Informationsschicht aufgebracht und der Tragekörper über eine weitere Transportvorrichtung an die zweite Embossingeinheit 20 weitergeleitet. Dort wiederum wird die dritte Informationsschicht aufgebracht, der Informationsträger mittels einer weiteren Transportvorrichtung 5 an die vierte Embossingeinheit 20 weitergeleitet, wo er mit der vierten Informationsschicht versehen und mit einer Coverschicht fertiggestellt wird. Durch die Hintereinanderreihung beliebig vieler Embossingmaschinen kann somit in einer Herstellungslinie ein optischer Datenträger mit beliebig vielen Informationsschichten hergestellt werden.

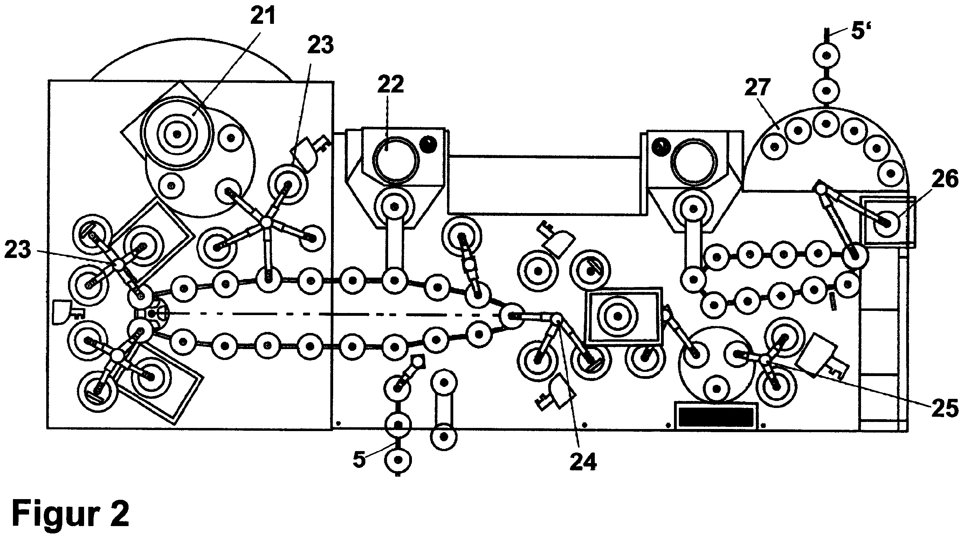

In der Figur 2 wird eine Embossingeinheit 20 an einem Ausführungsbeispiel näher erläutert. Über die Transportvorrichtung 5 gelangt der Informationsträger in die Embossingeinheit 20. Kommt der Informationsträger aus der Spritzgießeinheit 10, so wird er in der Metallisierung 22 verspiegelt. Anschließend wird der Prägelack in einer Beschichtungsvorrichtung für die Prägung 23 beschichtet. Es hat sich als vorteilhaft herausgestellt, diese Beschichtung in zwei Schritten durchzuführen. Die ersten etwa 80% der Schichtdicke werden aufgetragen und ausgehärtet, anschließend wird der restliche Lack aufgetragen, so dass beim Prägeprozess in der Prägevorrichtung 21, wo der Lack bei aufliegender Prägematrize ausgehärtet wird, weniger Strahlung, insbesondere UV-Strahlung, zum Aushärten eingebracht werden muss, so dass der damit verbundene Materialstress des Tragekörpers stark verringert wird. Nach der anschließenden Metallisierung in der Vorrichtung 22 wird der Informationsträger in der Qualitätsinspektionsvorrichtung 26 auf optische Fehler untersucht und, wenn diese Untersuchung positiv verlaufen ist, an der Ausgabeeinheit 27 auf die Transportvorrichtung 5' abgelegt, die den Informationsträger zur nächsten Embossingeinheit 20 weiterleitet. Wenn das Verfahren der Herstellung der Schichten stabil läuft, kann auch die Qualitätsinspektionsvorrichtung 26 aus dem Verfahren herausgenommen werden und die Qualitätskontrolle allein nach dem Aufbringen der letzten Schicht erfolgen.

Bei der letzten Embossingeinheit 20 in der Vorrichtungsanordnung wird der Informationsträger nach der Metallisierung 22 der Beschichtungsvorrichtung für Coverlack 24 zugeführt, um anschließend in die Beschichtungsvorrichtung für die Oberflächenschutzschicht 25 zugeführt zu werden. Dort wird die Oberfläche mit einer dünnen, kratzfesten Schicht belegt. Nach dem Passieren der Qualitätsinspektionsvorrichtung 26, in der der optische Informationsträger insbesondere auf optische Fehler untersucht wird, wird der Informationsträger in der Ausgabeeinheit 27 an einer Ausgabestation, an der keine Transportvorrichtung 5' angeordnet ist, abgelegt.

Die Abbildung der Figur 2 ist ähnlich zu der im SINGULUS Prospekt "BLULINE II The Platform for High-Quality-Blu-Ray-Discs, Hrsg. Singulus Technologies AG, Kahl, Deutschland, 11/2015, Seite 3".

In dem in Figur 3 gezeigten Beispiel wurde die Vorrichtung 1 aus der Figur 1 auf die Fertigung eines zwei-schichtigen optischen Informationsträgers umgerüstet. Dabei wurden die letzten beiden Embossingeinheit 20' abgekoppelt. Diesen Embossingeinheiten 20' wurden jeweils eine weitere Spritzgießeinheit 10' zugeordnet und mit eine Transportvorrichtung 5" verbunden. So lassen sich aus der bisherigen Vorrichtung zur Herstellung eines vier-schichtigen optischen Datenträgers drei Vorrichtungen zur Herstellung eines zweischichtigen Informationsträgers 1, 1' erstellen. Auf diese Weise lassen sich die einzelnen Embossingeinheiten 20, 20' vielseitig nutzen, was zu einer höheren Auslastung und damit Stückkosten-günstigeren Fertigung führt.

## Patentansprüche

1. Vorrichtung (1) zur Herstellung eines n-schichtigen optischen Informationsträgers aufweisend:
- eine Spritzgießeinheit (10,10') zur Herstellung eines Trägerkörpers mit einer ersten Informationsschicht,
- eine erste Embossingeinheit (20) zur Herstellung einer zweiten Informationsschicht, wobei eine Embossingeinheit mindestens eine Auftragsvorrichtung (23) für den die Informationsschicht bildenden Lack, eine Prägevorrichtung (21), mit der die Information in den Lack übertragen wird, eine Aushärtevorrichtung, die durchaus auch Bestandteil der Prägevorrichtung (21) sein kann, eine Metallisierungsvorrichtung (22), eine Auftrage- und Härtevorrichtung für den Coverlack umfasst und welche weiterhin einen Eingang aufweist, über den Informationsträger in die Embossingeinheit (20) aufgenommen werden können, wobei die Embossingeinheit weiter eine Ausgabeeinheit (27) aufweist, über welche die beschichteten Informationsträger ausgegeben werden, wobei der Vorrichtung weitere (n-2) Embossingeinheiten (20, 20') zur Herstellung von jeweils einer weiteren Informationsschicht, wobei "n" größer als zwei ist, zugeordnet sind und die jeweiligen Einheiten (10, 20; 10', 20') so miteinander verknüpft sind, dass der n-schichtige Informationsträger in einer Inlinefertigung hergestellt wird, und
dass die weiteren (n-2) Embossingeinheiten (20) an die Vorrichtung an- und abgekoppelt werden können, wobei die weiteren Embossingeinheiten (20, 20') jeweils einen Eingang und eine Ausgabeeinheit (27) aufweisen, **dadurch gekennzeichnet,**
**dass** mindestens eine abgekoppelte Embossingeinheit (20') mit einer weiteren Spritzgießeinheit (10') gekoppelt werden kann, so dass damit eine weitere, unabhängige Vorrichtung (1') zur Herstellung eines mehrschichtigen Informationsträgers gebildet ist.

2. Vorrichtung (1) gemäß Anspruch 1,
**dadurch gekennzeichnet,**
**dass** der Vorrichtung eine Steuereinheit zugeordnet ist, die den Herstellungsablauf steuert.

3. Vorrichtung (1) gemäß Anspruch 2,
**dadurch gekennzeichnet,**
**dass** die Steuereinheit so programmiert ist, dass die Änderung des Ablaufs zur Herstellung unterschiedlicher mehrschichtiger optischer Informationsträger nur wenige Einstellschritte erfordert.

4. Vorrichtung (1) gemäß einem der vorigen Ansprüche,
**dadurch gekennzeichnet,**
**dass** eine Kopplung (5, 5') zwischen den verschiedenen Embossingeinheiten (20) dadurch erfolgt, dass die Ausgabeeinheit (27) der Embossingeinheit (20) mit dem Eingang der in der Anordnung folgenden Embossingeinheit (20) verbunden ist.

5. Vorrichtung (1) gemäß einem der vorigen Ansprüche,
**dadurch gekennzeichnet,**
**dass** diese einen Raum zur Positionierung der weiteren Spritzgießeinheit (10') aufweist, in dem die weitere Spritzgießeinheit (10') angeordnet und mit der mindestens einen abgekoppelten Embossingeinheit (20') verbunden ist.

6. Verfahren zur Herstellung eines n-schichtigen optischen Informationsträgers, umfassend folgende Schritte:
- Herstellen eines Trägerkörpers mit einer ersten Informationsschicht in einem Spritzgießverfahren, wobei die erste Informationsschicht mit einer reflektierenden Schicht versehen wird,
- Aufbringen einer zweiten Informationsschicht mittels eines Embossingverfahrens, wobei die zweite Informationsschicht mit einer entsprechend reflektierenden Schicht versehen wird, und
- Aufbringen weiterer (n-2) Informationsschichten mittels des Embossingverfahrens und Versehen jeder der Informationsschichten mit einer entsprechend reflektierenden Schicht, wobei "n" größer als zwei ist,
wobei der n-schichtige Informationsträger in einer Inlinefertigung hergestellt wird, wobei jede Informationsschicht, bis auf die erste, auf einer eigenen Embossingeinheit (20) hergestellt wird, wobei eine Embossingeinheit (20) mindestens eine Auftragsvorrichtung (23) für den die Informationsschicht bildenden Lack, eine Prägevorrichtung (21), mit der die Information in den Lack übertragen wird, eine Aushärtevorrichtung, die durchaus auch Bestandteil der Prägevorrichtung (21) sein kann, eine Metallisierungsvorrichtung (22), eine Auftrage- und Härtevorrichtung für den Coverlack und eine Ausgabeeinheit (27) umfasst, und das Verfahren nach der letzten aufgebrachten Informationsschicht durch das Aufbringen einer Coverschicht beendet wird, wobei eine Steuereinheit den Verfahrensablauf steuert, **dadurch gekennzeichnet,**
**dass** bei der Herstellung eines mehrschichtigen optischen Datenträgers mit weniger als n Schichten nicht alle Embossingeinheiten genutzt werden, wobei die ungenutzten Embossingeinheiten (20') aus der Steuerung herausgenommen werden und
**dass** die aus der Steuerung herausgenommenen Embossingeinheiten (20') einem weiteren Verfahren zugeführt und steuerungstechnisch in dieses weitere Verfahren eingebunden werden.

7. Verfahren gemäß Anspruch 6,
**dadurch gekennzeichnet,**
**dass** das Verfahren zur Herstellung nach dem Aufbringen von zwei oder mehr Schichten beendet wird.

8. Verfahren gemäß Anspruch 6 oder 7,
**dadurch gekennzeichnet,**
**dass** die Embossingeinheiten (20') bei der Auskopplung aus dem ersten Verfahren und den Einbinden in ein weiteres Verfahren räumlich nicht bewegt werden.

## Claims

1. Apparatus (1) for producing an N-layer optical information carrier comprising:
- an injection moulding unit (10, 10') for producing a carrier body with a first information layer,
- a first embossing unit (20) for producing a second information layer, wherein an embossing unit comprises at least one applicator device (23) for the lacquer forming the information layer, an imprinting device (21) with which the information is transferred into the lacquer, a hardening device which can also throughout be a constituent part of the imprinting device (21), a metallizing device (22), an application and hardening device for the covering lacquer, and which furthermore has an inlet via which information carriers can be received into the embossing unit (20), wherein the embossing unit furthermore has an output unit (27) via which the coated information carriers are discharged, wherein the apparatus is assigned further (n-2) embossing units (20, 20') for producing a further information layer each, wherein "n" is greater than two, and the respective units (10, 20; 10',20') are linked to one another so that the n-layer information carrier is produced in an inline production, and that the further (n-2) embossing units (20) can be coupled to and uncoupled from the apparatus, wherein the further embossing units (20, 20') each have an inlet and an output unit (27),
**characterized in that**
at least one uncoupled embossing unit (20') can be coupled to a further injection moulding unit (10') so that a further independent apparatus (1') is thus formed for producing a multi-layered information carrier.

2. Apparatus (1) according to claim 1,
**characterized in that**
the application is assigned a control unit which controls the production sequence.

3. Apparatus (1) according to claim 2,
**characterized in that**
the control unit is programmed so that the change in the sequence for manufacturing different multi-layer optical information carriers requires only a few adjustment steps.

4. Apparatus (1) according to one of the preceding claims,
**characterized in that**
a coupling (5, 5') is made between the different embossing units (20) whereby the output unit (27) of the embossing unit (20) is connected to the inlet of the following embossing unit (20) in the arrangement.

5. Apparatus (1) according to one of the preceding claims,
**characterized in that**
it has a space for positioning the further injection moulding unit (10'), in which (space) the further injection moulding unit (10') is arranged and is connected to the at least one uncoupled embossing unit (20').

6. Method for producing an n-layer optical information carrier, comprising the following steps:
- producing a carrier body with a first information layer in an injection moulding process, wherein the first information layer is provided with a reflecting layer;
- applying a second information layer by means of an embossing process wherein the second information layer is provided with a corresponding reflecting layer, and
- applying further (n-2) information layers by means of the embossing process and providing each of the information layers with a corresponding reflecting layer, wherein "n" is greater than two, wherein the n-layer information carrier is made in an inline production wherein each information layer, except for the first, is produced on its own embossing unit (20), wherein an embossing unit (20) comprises at least one application device (23) for the lacquer forming the information layer, an imprinting device (21), with which the information is transferred into the lacquer, a hardening device which can also be throughout a constituent part of the imprinting device (21), a metallizing device (22), an application and hardening device for the covering lacquer, and an output unit (27), and the process is terminated after the last applied information layer by applying a covering layer, wherein a control unit controls the process sequence,
**characterized in that**
- during the production of a multi-layer optical data carrier having less than n layers not all the embossing units are used, wherein the unused embossing units (20') are removed from the control, and
- that the embossing units (20') removed from the control are supplied to a further process and are incorporated with technical control into this further process.

7. Method according to claim 6
**characterized in that**
the process for production is terminated after the application of two or more layers.

8. Method according to claim 6 or 7
**characterized in that**
the embossing units (20') during uncoupling from the first process and incorporation into a further process are not spatially moved.

## Revendications

1. Dispositif (1) pour la fabrication d'un corps de support d'information optique à n couches, présentant:
- une unité de moulage par injection (10, 10') pour la fabrication d'un corps de support, avec une première couche d'information,
- une unité de gaufrage (20) pour la fabrication d'une deuxième couche d'information, sachant qu'une unité de gaufrage comprend au moins un dispositif d'application (23) pour le vernis formant la couche d'information, un dispositif d'estampage (21) avec lequel l'information est estampée dans la laque, un dispositif de durcissement, qui peut parfaitement être aussi composant du dispositif d'estampage (21), un dispositif de métallisation (22) et un dispositif d'application et de durcissement pour le vernis de couverture, et qu'elle présente en plus une entrée par le biais de laquelle des supports d'information peuvent être reçus par l'unité de gaufrage (20), sachant que l'unité de gaufrage présente en outre une unité de distribution (27), par l'intermédiaire de laquelle les supports d'information revêtus peuvent être distribués, sachant qu'au dispositif sont associées d'autres (n-2) unités de gaufrage (20, 20') destinées chacune à la réalisation d'une autre couche d'information, sachant que «n» est supérieur à deux, et que les unités respectives (10, 20; 10', 20') sont reliées ensemble de manière à ce que le support d'information à n couches puisse être fabriqué par production en ligne, et, de plus, que (n-2) unités de gaufrage (20) puissent être couplées avec et découplées du dispositif, sachant que les autres unités de gaufrage (20, 20') présentent chacune une entrée et une unité de distribution (27),
**caractérisé en ce que**
au moins une unité de gaufrage (20') découplée peut être couplée avec une autre unité de moulage par injection (10') de sorte qu'un autre dispositif indépendant (1') soit formé pour la fabrication d'un support d'information à plusieurs couches.

2. Dispositif (1) selon la revendication 1,
**caractérisé en ce que**,
au dispositif, est associée une unité de commande, qui commande le déroulement de la fabrication.

3. Dispositif (1) selon la revendication 2,
**caractérisé en ce que**
l'unité de commande est programmée de sorte que le changement du déroulement de la fabrication de différents supports d'information optiques à plusieurs couches n'exige que peu d'étapes de réglage.

4. Dispositif (1) selon l'une des revendications précédentes,
**caractérisé en ce**
**qu'**un couplage (5, 5') entre les différentes unités de gaufrage (20') est effectué en ce que l'unité de distribution (27) de l'unité de gaufrage (20) est reliée avec l'entrée de l'unité de gaufrage (20) faisant suite dans l'arrangement.

5. Dispositif (1) selon l'une des revendications précédentes,
**caractérisé en ce que**
celui-ci présente un espace pour le positionnement d'une autre unité de moulage par injection (10'), dans lequel l'autre unité de moulage par injection (10') est disposée et est reliée à l'au moins une unité de gaufrage (20') découplée.

6. Procédé de fabrication d'un support d'information optique à n couches comprenant les étapes suivantes:
- fabrication d'un support d'information optique avec une première couche d'information au cours d'un processus de moulage par injection, sachant que la première couche d'information est pourvue d'une couche réfléchissante,
- application d'une deuxième couche d'information au cours d'un processus de gaufrage, sachant que la deuxième couche d'information est pourvue d'une couche adéquatement réfléchissante, et
- application d'autres (n-2) couches d'information selon le procédé de gaufrage et revêtement de chacune des couches d'information avec une couche adéquatement réfléchissante, sachant que «n» est supérieur à deux, sachant que le support d'information optique à n couches est fabriqué par production en ligne, sachant que chaque couche d'information, à l'exception de la première, est fabriquée par sa propre unité de gaufrage (20), sachant qu'une unité de gaufrage (20) comprend au moins un dispositif d'application (23) pour le vernis formant la couche d'information, un dispositif d'estampage (21) avec lequel l'information est transmise dans la laque, un dispositif de durcissement, qui peut parfaitement être aussi composant du dispositif d'estampage (21), un dispositif de métallisation (22), un dispositif d'application et de durcissement pour le vernis de couverture et une unité de distribution (27), et que, la dernière couche d'information ayant été appliqué, le processus est terminé par l'application d'une couche de couverture, sachant qu'une unité de commande règle le déroulement du processus,
**caractérisé en ce que**,
lors de la fabrication d'un support de données optique à plusieurs couches, qui est doté de moins que n couches, on n'utilise pas toutes les unités de gaufrage, sachant que les unités de gaufrage non utilisées (20') sont retirées de la commande, et
que les unités de gaufrage (20') retirées de la commande sont attribuées à un autre processus et intégrées dans cet autre processus.

7. Procédé selon revendication la revendication 6,
**caractérisé en ce que**
le processus de fabrication est terminé après l'application de deux ou de plusieurs couches.

8. Procédé selon revendication 6 ou 7,
caractérisé en ce
les unités de gaufrage (20') ne sont pas déplacées lorsqu'elles sont découplées du premier processus et intégrées dans un autre processus.
